(19) Europäisches Patentamt
European Patent Office
Office européen des brevets

(11) **EP 2 867 861 B1**

## (12) EUROPEAN PATENT SPECIFICATION

(45) Date of publication and mention
of the grant of the patent:
**22.02.2017  Bulletin 2017/08**

(21) Application number: **13750140.9**

(22) Date of filing: **17.06.2013**

(51) Int Cl.:
**G06T 7/20** (2017.01)    **G06T 7/00** (2017.01)

(86) International application number:
**PCT/IB2013/054932**

(87) International publication number:
**WO 2014/001946 (03.01.2014 Gazette 2014/01)**

(54) **MOTION PARAMETER ESTIMATION**

BEWEGUNGSPARAMETERSCHÄTZUNG

ESTIMATION DE PARAMÈTRES DE DÉPLACEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **27.06.2012  US 201261664874 P**

(43) Date of publication of application:
**06.05.2015  Bulletin 2015/19**

(73) Proprietors:
• **Koninklijke Philips N.V.**
**5656 AE Eindhoven (NL)**
Designated Contracting States:
**AL AT BE BG CH CY CZ DK EE ES FI FR GB GR
HR HU IE IS IT LI LT LU LV MC MK MT NL NO PL
PT RO RS SE SI SK SM TR**
• **Philips GmbH**
**20099 Hamburg (DE)**
Designated Contracting States:
**DE**

(72) Inventors:
• **KABUS, Sven**
**NL-5656 AE Eindhoven (NL)**
• **LORENZ, Cristian**
**NL-5656 AE Eindhoven (NL)**
• **KLINDER, Tobias**
**NL-5656 AE Eindhoven (NL)**
• **VON BERG, Jens**
**NL-5656 AE Eindhoven (NL)**

(74) Representative: **Steffen, Thomas**
**Philips Intellectual Property & Standards
High Tech Campus 5
5656 AE Eindhoven (NL)**

(56) References cited:
• **TOKIHIRO YAMAMOTO ET AL: "Investigation of
four-dimensional computed tomography-based
pulmonary ventilation imaging in patients with
emphysematous lung regions;4D-CT lung
ventilation imaging in emphysema patients",
PHYSICS IN MEDICINE AND BIOLOGY,
INSTITUTE OF PHYSICS PUBLISHING, BRISTOL
GB, vol. 56, no. 7, 16 March 2011 (2011-03-16) ,
pages 2279-2298, XP020188436, ISSN: 0031-9155,
DOI: 10.1088/0031-9155/56/7/023**
• **BYSTROV D ET AL: "Local motion analysis in 4D
lung CT using fast groupwise registration",
IMAGE PROCESSING (ICIP), 2009 16TH IEEE
INTERNATIONAL CONFERENCE ON, IEEE,
PISCATAWAY, NJ, USA, 7 November 2009
(2009-11-07), pages 1749-1752, XP031629280,
ISBN: 978-1-4244-5653-6**
• **HONGHAI ZHANG ET AL: "Shape and motion
analysis of left ventricle dyssynchrony from
real-time 3D echocardiography", BIOMEDICAL
IMAGING: FROM NANO TO MACRO, 2010 IEEE
INTERNATIONAL SYMPOSIUM ON, IEEE,
PISCATAWAY, NJ, USA, 14 April 2010
(2010-04-14), pages 616-619, XP031693382, ISBN:
978-1-4244-4125-9**

EP 2 867 861 B1

**Description**

The following generally relates to estimating motion parameters of a moving object, and is described with particular application to computed tomography (CT). However, the following is also amenable to other imaging modalities.

Lung ventilation is a main indicator for the functioning of the respiratory system due to the fact that ventilation is linked to the change in lung volume. In particular, assessing ventilation on a local or regional level becomes increasingly important for diagnosis, e.g., for early detection of diseases, or for therapy planning, e.g., for functional avoidance in lung cancer radiotherapy.

Nuclear imaging such as single photon emission computed tomography (SPECT) or positron emission tomography (PET) are the current standard for direct functional assessment of lung ventilation, with SPECT ventilation/perfusion (SPECT V/Q) being the "gold" standard. Unfortunately, SPECT and PET suffer from low spatial resolution, high cost, long scan time and/or low accessibility.

Current image registration approaches make it possible to assess regional volume change (essentially ventilation) of the lungs on the basis of breathing gated 4D CT imaging. This is especially of interest for radiation therapy planning, where it is important to identify well-functioning lung regions, which can then be spared from radiation. The basic idea is to estimate deformation fields from a selected reference phase to all other phases which can then be analyzed to obtain the voxel-wise volume change over the respiratory cycle.

4D CT has been adopted by more and more radiation therapy centers as a standard imaging modality to assess tumor motion. Acquisitions are often taken again before each radiation fraction. A 4D CT based lung ventilation measurement could, therefore, be much easier integrated in the current radiation therapy planning workflow than the use of an additional modality such as SPECT. Generally, a breathing gated 4D CT acquisition typically consists of ten 3D CT images corresponding to ten phase points in the breathing cycle.

In order to estimate local volume change, the 3D images corresponding to only two phases, the max-exhale phase and the max-inhale phase, of the lungs are selected and registered using non-rigid registration. Local volume change information can be extracted from the registered images in two ways, i) based on intensity differences, or ii) based on local properties of the deformation field. However, the estimation can be affected by multiple sources of error, such as, for example, imaging artifacts, binning artifacts or image noise.

Imaging or binning artifacts can be spread over many slices, leading to non-optimal input data for the registration and thus may significantly affect the local volume change estimation. Examples of such artifacts include duplicate diaphragm contours or missing structures in one or both data sets to be registered. Unfortunately, imaging or binning artifacts are very common in dynamic acquisitions as diseased patients have typically have problems in breathing reproducibly.

Furthermore, the max-inhale and max-exhale phase may vary locally, leading to a regional underestimation of ventilation amplitude. Moreover, by focusing only on two phases of the breathing or inspecting each phase separately, the dynamics of the respiratory system are usually not considered. Estimating local volume changes with respect to other tissue of interest (e.g., cardiac, muscle, etc.) and/or moving non-anatomical objects may face similar obstacles.

Furthermore, it is known to compute regional exhale-to-inhale volume change from Phys. Med. Biol. 56 (2011) 2279-2298, doi: 10.1088/0031-9155/56/7/023.

In view of the foregoing, there is an unresolved need for other approaches for estimating local volume change.

Aspects described herein address the above-referenced problems and others.

In one aspect, an object motion parameter determiner includes a deformation vector field determiner that determines deformation vector fields for a 4D image set, which includes three or more images corresponding to three or more different motion phases of motion of a moving object. The object motion parameter determiner further includes a volume curve generator that generates a volume curve for a voxel based on the deformation vector fields. The object motion parameter determiner further includes a model fitter that fits a predetermined motion model to the volume curve. The object motion parameter determiner further includes a parameter determiner that estimates at least one object motion parameter based on the fitted model.

In another aspect, a system includes determining deformation vector fields for a 4D image set, which includes three or more images corresponding to three or more different motion phases of motion of a moving object. The system further includes generating a volume curve for a voxel based on the deformation vector fields. The system further includes fitting a predetermined motion model to the volume curve. The system further includes estimating at least one object motion parameter based on the fitted model and generating a signal indicative thereof.

In another aspect, a computer readable storage medium is encoded with computer readable instructions. The instructions, when executed by a processor, cause the processor to: determine at least one of a motion cycle amplitude or phase based at least three images corresponding to different motion phases and on a voxel-wise correspondence on the motion cycle.

The invention may take form in various components and arrangements of components, and in various steps and arrangements of steps. The drawings are only for purposes of illustrating the preferred embodiments and are not to be construed as limiting the invention.

FIGURE 1 schematically illustrates an imaging system in connection with an object motion parameter determiner.
FIGURE 2 illustrates an example of the object motion parameter determiner.
FIGURES 3, 4 and 5 illustrate examples of motion models fitted to measured motion trajectories.
FIGURE 6 illustrates an example method.

The following describes an approach to estimate motion parameters (e.g., amplitude, phase, phase shift, stiffness, etc.) of a moving object based on a 4D image set of the object. As utilized herein, a 4D image set includes 3D images of the moving object over the motion cycle of the moving object, which includes a full expansion phase, a full contraction phase, one or more phases between the full expansion and full contraction phases, and one or more phases between the full contraction and full expansion phases

By way of example, the respiratory motion cycle includes a full inhalation phase, a full exhalation phase, and phases there between. The cardiac motion cycle includes a maximum expansion phase, a maximum contraction phase and phases there between. Muscle, in general, includes fibers that move through a maximum contraction phase, a relaxation phase, and phases there between. Generally, the motion cycle can be associated with any tissue or non-anatomical structure that moves through a cycle of full expansion, to full contraction, and back to full expansion, one or more times.

As described in greater detail below, in one non-limiting instance, the motion parameters are estimated by processing a 4D image set that includes at least three 3D volumetric images, each representing a different phase of the motion cycle, to determine volume curves for each voxel across the three or more images (resulting in a 3D set of curves), fitting a predetermined motion model to each volume curve, and determining the function parameters based on the fitted models.

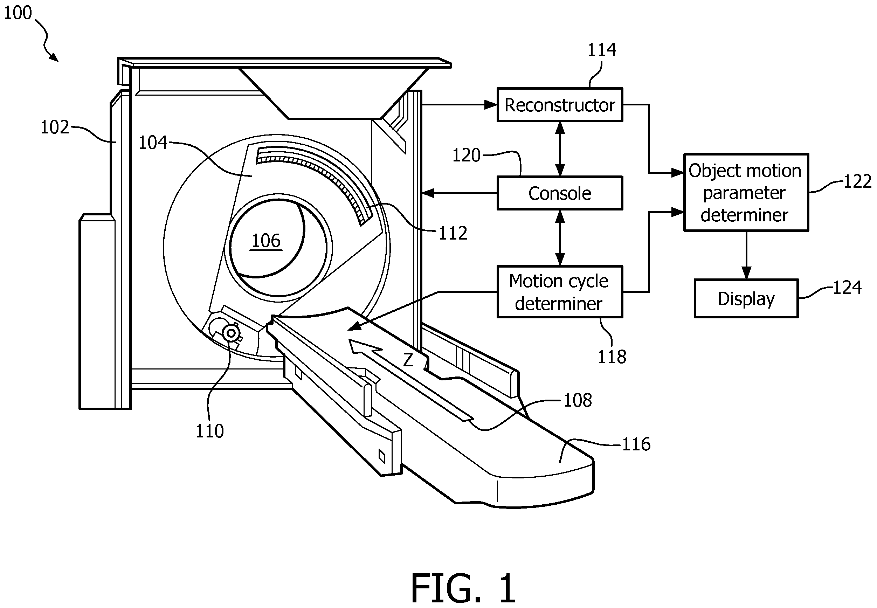

Suitable imaging modalities include modalities that can acquire a 4D image set such as, but are not limited to, CT and MR. For sake of brevity, the following is described in connection with CT. Initially referring to FIGURE 1, an imaging system 100 such as a CT scanner is schematically illustrated. The imaging system 100 includes a generally stationary gantry 102 and a rotating gantry 104, which is rotatably supported by the stationary gantry 102 and rotates around an examination region 106 about a z-axis 108.

A radiation source 110, such as an x-ray tube, is rotatably supported by the rotating gantry 104, rotates with the rotating gantry 104, and emits radiation that traverses the examination region 106. A radiation sensitive detector array 112 subtends an angular arc opposite the radiation source 110 across the examination region 106. The radiation sensitive detector array 112 detects radiation traversing the examination region 106 and generates projection data indicative thereof for each detected photon.

A reconstructor 114 reconstructs the projection data, generating volumetric image data indicative of a scanned portion of a subject or object located in the imaging region 106. This includes reconstructing data acquired during 4D acquisitions, which include 3D acquisitions of a moving object acquired over time over one or more motion cycles of the moving object. A subject support 116, such as a couch, supports an object or subject in the examination region 106.

A motion cycle determiner 118 determines a motion cycle of the moving object. For respiratory motion, the motion cycle determiner 118 may include a respiratory belt, external markers positioned on the moving object, etc. For cardiac applications, the motion cycle determiner 118 may include an electrocardiograph (ECG). For muscle applications, the motion cycle determiner 118 may include a pressure sensor. The motion cycle is determined concurrently with data acquisition in time.

A general-purpose computing system or computer serves as an operator console 120. The console 120 includes a human readable output device such as a monitor and an input device such as a keyboard, mouse, etc. Software resident on the console 120 allows the operator to interact with and/or operate the scanner 100 via a graphical user interface (GUI) or otherwise. For example, the console 120 allows the operator to select an imaging protocol such as a motion gated (e.g., respiratory, cardiac, muscle, etc.) 4D CT acquisition.

An object motion parameter determiner 122 processes 4D data sets such as the 4D image set acquired by the imaging system 100 and/or other imaging system. As described in greater detail below, in one instance, the object motion parameter determiner 122 determines a volume curve for each voxel across the images of the 4D image set, each image corresponding to a different phase of the motion cycle of the object, fits a predetermined motion model to each volume curve, determines the motion parameters of the moving object based on the fitted model (which represents a voxel-wise volume change over the entire motion cycle that takes into the dynamics of the motion cycle), and generates a signal indicative thereof. The results can be visually presented via a display 124 and/or conveyed to one or more other devices.

The foregoing approach to determining the motion parameters of the moving object results is a more plausible estimate of the parameters relative to a configuration of the system 100 in which only two phases, such as the maximum expansion and the maximum expansion phases, of the motion cycle are considered since more phases and thus more information about the motion is employed. This approach also makes it possible to assess regional volume change and thus is well-suited for applications like radiation therapy planning where it is important to identify well-functioning lung regions which can then be spared from radiation. This will also allow 4D CT image set to be adopted by more and more radiation therapy centers since acquisitions are often made before each radiation fraction and the 4D CT image set can be integrated into the radiation therapy planning workflow.

It is to be appreciated that the object motion parameter determiner 122 can be implemented via a computing system, such as a computer, which includes one or more processors executing one or more computer readable instructions encoded, embed, stored, etc. on computer readable storage medium such as physical memory and/or other non-transitory memory. Additionally or alternatively, at least one of the computer readable instructions in can be carried by a signal, carrier wave and/or other transitory medium. The computing system also includes a human readable output device such as a monitor and an input device such as a keyboard, mouse, etc. As will be recognized by one of ordinary skill in the art, in another embodiment, one or more of the components (described below) of the object motion parameter determiner 122 can alternatively be implemented in different computing systems.

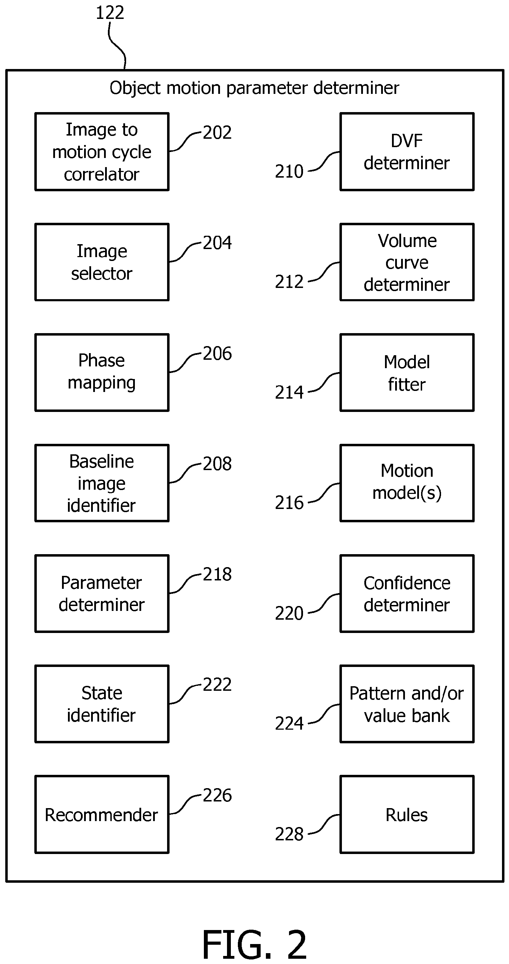

FIGURE 2 illustrates an example of the object motion parameter determiner 122.

An image to motion cycle correlator 202 receives the 4D image set and the motion cycle signal and correlates the images of the 4D image set with the motion cycle. For example, the image to motion cycle correlator 202 can create a mapping that identifies, for any particular phase of the motion cycle, the image(s) of the 4D image set that was acquired during that particular phase, and/or for any particular image(s) of the 4D image set, the time point (and hence the motion phase) of the motion cycle at which the image was acquired.

An image selector 204 selects a group of images from the 4D image set to process. In one instance, the image selector 204 selects the entire set of images to process. In another instance, the image selector 204 selects a sub-set of the images, which includes at least three images corresponding to three different phases of the motion cycle. The image selector 204 may select the images based on user input, default or user specified settings (e.g., full expansion, full contraction, and one or more phases of interest there between), and/or other criteria.

By way of non-limiting example, in one instance the image selector 204 selects N (e.g., N=10) images that cover N different equally spaced phases of a motion cycle. For instance, where a motion cycle is delineated based on percentage with 0% being the first phase and 99% being the last phase before the motion cycle is repeated back at the 0% phase, the selected images may cover phases 0%, 10%, 20%, 30%, 40%, 50%, 60%, 70%, 80% and 90%. Other phases and/or other phase spacing, including non-equal spacing, are contemplated herein.

A phase mapping 206 provides a mapping between the percentage and the state of the contraction/expansion. For example, 0% may represent maximum expansion, maximum contraction, or some amount of expansion/contraction there between. However, for explanatory purposes, 0% represents the maximum expansion phase for this example. For instance, with respect to respiratory ventilation, 0% represents maximum inhalation, 60% represents maximum exhalation, 10-50% represent the transition from maximum inhalation to maximum exhalation, and 70-90% represent the transition from maximum exhalation to maximum inhalation.

A baseline image identifier 208 identifies one or more of the selected images as a baseline image. This can be achieved through an automated approach and/or with user interaction. In one instance, the 0% phase is identified as the baseline image. The below discussion is based on such an identification. However, a different phase and/or more than one phase can be selected. For example, every odd numbered (or even numbered) phase can be identified as a baseline image.

Where the input images are already correlated to the motion cycle and selected for processing, the image to motion cycle correlator 202, the image selector 204, the mapping 206, and the baseline image identifier 208 can be omitted.

A deformation vector field (DVF) determiner 210 determines a deformation vector field (DVF) between the selected baseline image and each of the other images in the selected image set. Where one phase is selected (e.g., the 0% phase), this includes determining DVFs between the 0% phase image and each of the other selected images. Thus, where the selected image set includes N images, the deformation vector field determiner 210 determines N-1 sets of DVFs (i.e., a DVF for each pair of images). In another instance, DVFs are determined between neighboring pairs of images (e.g., between images 1 and 2, images 3 and 4, and so on) and/or other approaches.

The deformation vector field determiner 210 can use various approaches to determine DVFs. For example, the illustrated deformation vector field determiner 210 determines DVFs using a non-rigid (elastic) registration algorithm. In another instance, the deformation vector field determiner 210 employs a rigid (affine) registration algorithm and/or other algorithm. A suitable algorithm determines DVFs by mapping the baseline image onto the other images, and thus establishing a voxel-wise correspondence over the whole motion cycle, and then minimizes an objective function that includes a similarity measure and a regularizing term.

An example of such an algorithm is described in Kabus et al., Fast elastic image registration, In: Proc. of MICCAI Workshop: Medical Image Analysis For The Clinic -A Grand Challenge, (2010) 81-89. Generally, the algorithm described in Kabus et al. assumes a reference (or fixed) image $R(x)$ and a template (or moving) image $T(x)$. It finds an affine transformation $p$ as well as a deformation vector field (DVF) $u : \mathbb{R}^3 \rightarrow \mathbb{R}^3$ such that the displaced template image $T_u(x) := T(\phi(p; x) + u(x))$ minimizes both a similarity measure $D$ and a regularizing term S. Here, the mapping $\phi(p; x)$ describes the transformation of voxel position $x$ under an affine transformation given by the vector $p$.

A suitable similarity measure $D$, using sum of squared differences, is shown in EQUATION 1:

EQUATION 1:

$$D[u] := \frac{1}{2} \int_{\Omega} W(x)[R(x) - T_u(x)]^2 dx,$$

where $W(x)$ is a weight map which depends on methodological choices, image modality, and/or application, and can be fixed or variable for the whole image. Other similarity measures based on correlation, entropy, image derivatives etc. are possible as well. A suitable regularizing term S, based on the Navier-Lame equation, is shown in EQUATION 2:

EQUATION 2:

$$S[u] := \int_{\Omega} \left( \frac{\mu}{4} \sum_{i,j=1}^{3} \left( \partial_{x_j} u_i(x) + \partial_{x_i} u_j(x) \right)^2 + \frac{\lambda}{2} (\nabla \cdot u(x))^2 \right) dx.$$

Here, the parameters $\lambda$ and $\mu$ (Navier-Lamé parameters) describe the modeled material properties. They can be fixed or variable over the entire image. Regularizing terms based on other derivatives of $u$ are possible as well. By combining the similarity measure $D$ and the regularizing term S, the registration is formulated as minimizing the joint functional $D[u] + S[u] \xrightarrow{u} u$ min. Further functionals can be added to the joint functional, for example to incorporate constraints such as landmark positions or DVF-related properties. Based on calculus of variations the joint functional is reformulated as a system of non-linear partial differential equations as shown in EQUATION 3:

EQUATION 3:

$$\mu \Delta u + (\mu + \lambda) \nabla \cdot \nabla u = \nabla T_u (R - T_u)$$

For discretizing EQUATION 3, finite differences in conjunction with Neumann boundary conditions can be used. The resulting system of linear equations consists of a sparse, symmetric and highly structured matrix arising from the regularizing term and a force vector corresponding to the similarity measure. The system of equations can then be linearized and iteratively solved by a conjugate gradient scheme. The iteration is stopped based on predetermined criteria such as if the update in $u$ is below 0.05 mm for all positions indicating convergence and/or otherwise.

A volume curve determiner 212 determines a volume curve for each voxel based on the DVFs. In one instance, this is achieved by calculating the Jacobian matrix, consisting of first derivatives of the deformation field. By way of non-limiting example, with N=10 images representing phases 0% through 90% in increments of 10% with the baseline image representing the phase 0%, for each DVF $u^{0\% \rightarrow i\%}$, $i = 10, 20, ..., 90$, the voxel-wise volume change is determined by calculating the Jacobian $c(x)x := \det(\nabla u^{0\% \rightarrow t\%}(x))$ for each voxel $x$ of the DVF. An alternative approach includes calculating intensity differences.

Generally, the Jacobian estimates how much the region around a voxel is contracting or expanding. A value of one (1) corresponds to volume preservation whereas a value smaller (or larger) than one (1) indicates local compression (or expansion). For each voxel $x$, a vector is constructed as $V(x) := (1; V^{0\% \rightarrow 10\%}(x), V^{0\% \rightarrow 20\%}(x), ..., V^{0\% \rightarrow 90\%}(x))$ describing the volume change over the motion cycle as a volume curve in the temporal domain. For N images and N-1 registrations, the volume curve determiner 212 determines a volume curve for each image voxel across the set of images, each volume curve including N-1 values.

A model fitter 214 fits one or more of predetermined motion models 216 to the volume curve $V(x)$. For respiratory ventilation, an example of a suitable model is $cos^{2n}$, which is a 1D model used to describe lung volume vol($t$) over the respiratory cycle. Other respiratory models include, but are not limited to models based on unhealthy tissue, models based on healthy tissue, models based on prior knowledge of a particular patient and/or pathology, etc. For other tissue of interest (e.g., cardiac, muscle, etc.), models corresponding to the respective tissue are employed.

With the respiratory model, the relative volume change, with respect to a designated baseline phase (e.g., 0% phase, representing full inhalation), is given as vol($t$)/vol($t_{0\%}$). Subtracting 1 from this renders EQUATION 4:

## EQUATION 4:

$$\frac{\text{vol}(t)}{\text{vol}(t_{0\%})} - 1 = \frac{\text{vol}(t) - \text{vol}(t_{0\%})}{\text{vol}(t_{0\%})} =: \frac{\Delta\text{vol}(t)}{\text{vol}(t_{0\%})}.$$

With the 0% phase is full inhalation, $l$ representing the number of motion phases, $o$ representing a phase offset, $\alpha$ representing a motion amplitude, and $\phi$ representing the time of full exhalation, the EQUATION 4 can be expressed as shown in EQUATION 5:

## EQUATION 5:

$$V^{model}(x,t) = o + \alpha\, cos^{2n}\left(\frac{\pi}{l}(t - \phi) + \frac{\pi}{2}\right),$$

which describes the ventilation at time $t$ for a fixed spatial position $x$. A value for $n$ can be set to place emphasis on a particular phase (e.g., exhalation, which is usually longer than the inhalation)). EQUATION 5 can be alternately formulated to include one or more other parameters (e.g., stiffness, etc.) and/or omit one or more of $o$, $\alpha$ or $\phi$.

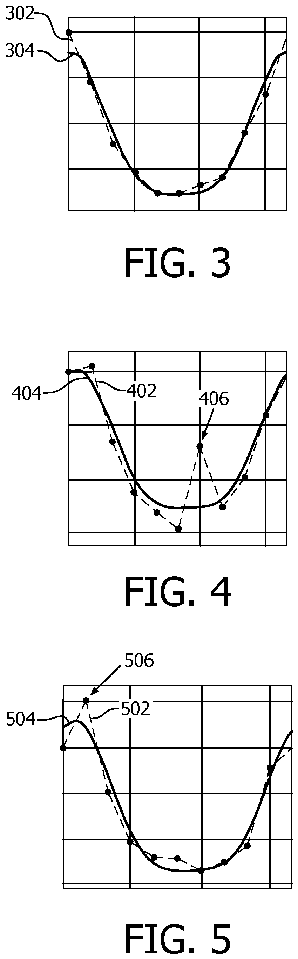

The model fitter 214 fits $v^{model}$ to $V$ using an optimization approach such as a least-squares optimization implemented by a Gauß-Newton and/or other scheme. FIGURES 3, 4 and 5 illustrate examples of $v^{model}$ fitted to $V$ for a voxel where the x-axis represents motion phase and the y-axis represents amplitude. In FIGURE 3, $v^{model}$ 302 is fitted to a volume curve $V$ 304, which behaves similar to the model; in FIGURE 4, $v^{model}$ 402 is fitted to a volume curve V 404 that includes an outlier 406, which would cause the amplitude to be underestimated, and in FIGURE 5, $V^{model}$ 502 is fitted to a volume curve $V$ 504 that is phase shifted as indicated at 506 such that expansion is not fullest at the 0% phase.

Returning to FIGURE 2, a parameter determiner 218 solves EQUATION 5 for $o$, $\alpha$ and $\phi$. The parameter determiner 218 can visually display the determined parameters via the display 124 (FIGURE 1). The parameter determiner 218 may also visually display $V^{model}$ fitted to V and/or $V$, concurrently with or separate from the parameters. The parameter determiner 218 can also generate a signal including such information and convey the signal to one or more other devices, such as a computing system running a therapy planning application.

A confidence determiner 220 can determine a confidence level for the estimated parameters. For example, in one instance, the confidence determiner 220 determines a fit error based on $V^{model}$ and $V$. For example, one non-limiting fit error can be calculated as the squared difference between $V^{model}$ and $V$, weighted with an inverse of the amplitude, as shown in EQUATION 6:

## EQUATION 6:

$$E(x) := \frac{1}{\max(\alpha(x), \varepsilon)} \|V^{model}(x,t) - V(t)\|^2$$

This error can be used as confidence level for the estimate. The confidence determiner 220 can visually present the error along with one or more $V^{model}$ fitted to $V$ and/or the parameters, and/or generate an error signal including the error and convey the error signal to one or more other devices.

An optional state identifier 222 compares the display $V^{model}$ fitted to $V$ and/or one or more of the parameters with patterns and/or values stored in a pattern and/or parameter bank 224 in which the stored patterns and/or values are known healthy and/or unhealthy states. If the state identifier 222 is able to match the fitted $V^{model}$ and/or the determined parameters to one or more patterns and/or values in the bank 224, the state identifier 222 generates a notification signal including the match.

The notification can be visually displayed via the display 124, showing the matched fitted $V^{model}$ and/or the determined parameters, and/or the corresponding health state. The notification can also be conveyed to one or more other devices. If the state identifier 222 is unable to match the fitted $V^{model}$ and/or the determined parameters to one or more patterns and/or values in the bank 224, the notification indicates this, or, alternatively, no notification is generated.

An optional recommender 226, based on a match of the state identifier 222, can generate a recommendation signal, which includes a recommendation for a course of action based on the identified state. In this example, the recommender 226 utilizes a set of predetermined rules 228 to determine the recommendation. The recommender 226 can visually present the recommendation signal in a human readable format via the display 124 and/or convey the recommendation signal to another device(s).

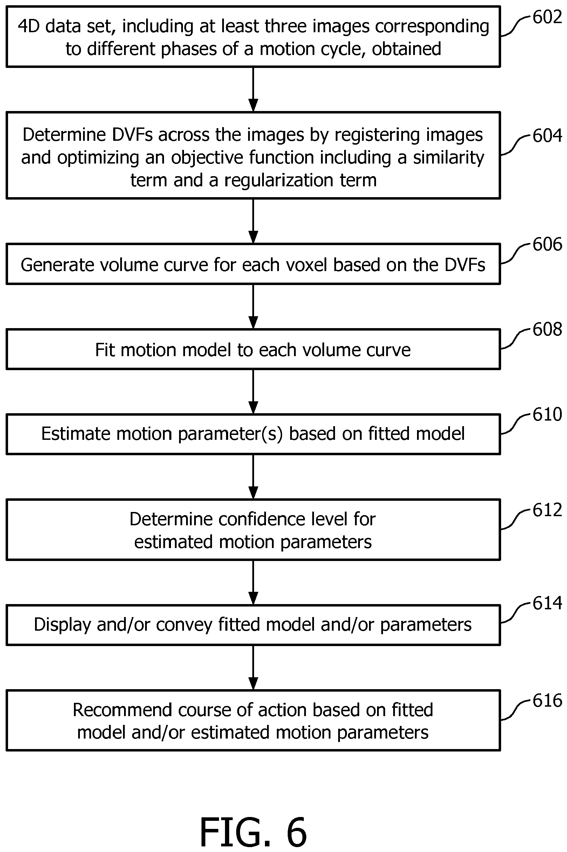

FIGURE 6 illustrates an example.

It is to be appreciated that the ordering of the acts is not limiting. As such, other orderings are contemplated herein. In addition, one or more acts may be omitted and/or one or more additional acts may be included.

At 602, a 4D image data set, including at least three volumetric images corresponding to at least three different motion phases of a motion cycle of an object, for the moving object is obtained.

At 604, DVFs are generated for each voxel across the at least three volumetric images by registering the at least three volumetric images are registered with a baseline(s) image and optimizing an objective function including a similarity term and a regularization term.

At 606, a volume curve is generated for each voxel based on the DVFs. As described herein, the volume curve can be generated by calculating either the Jacobian matrix or intensity differences, and the volume curve shows how much a region around a voxel is contracting or expanding.

At 608, a predetermined motion model is fitted to each volume curve.

At 610, one or more motion parameters are estimated based on the fitted model. Examples of such parameters include, but are not limited to motion amplitude, phase, phase shift, stiffness, etc.

At 612, optionally, a confidence level for the estimated one or more motion parameters is generated based on the fitted model and the volume curve.

At 614, one or more of the fitted model, the one or more parameters, or the confidence level is visually displayed and/or conveyed to another device.

At 616, optionally, the one or more of the fitted model and/or the one or more parameters can be mapped to a set of curves and/or parameters corresponding to known heath states of tissue and used to recommend a course of action based on the health.

The above may be implemented by way of computer readable instructions, encoded or embedded on computer readable storage medium, which, when executed by a computer processor(s), cause the processor(s) to carry out the described acts. Additionally or alternatively, at least one of the computer readable instructions is carried by a signal, carrier wave or other transitory medium.

The invention has been described with reference to the preferred embodiments. Modifications and alterations may occur to others upon reading and understanding the preceding detailed description. It is intended that the invention be constructed as including all such modifications and alterations insofar as they come within the scope of the appended claims.

## Claims

1. An object motion parameter determiner (122) configured to estimate a motion parameter for a motion characteristic of a moving object, comprising:

   a deformation vector field determiner (210) configured to determine deformation vector fields for a 4D image set, which 4D image set includes three or more different 3D images, each 3D image corresponding to a different temporal point in a motion phases of a motion cycle of the moving object, wherein each deformation vector field maps one of said 3D images to a consecutive one of said 3D images such as to establish a 3D voxel-wise correspondence between the images;
   a volume curve determiner (212) configured to generate, based on the deformation vector fields, for a 3D image voxel its corresponding volume curve across the set of 3D images, wherein said volume curve describes the voxel-wise 3D volume change over the motion cycle as a function of time;
   a model fitter (214) configured to fit a parametric predetermined motion model to the volume curve, wherein said fitting adapts the parameters of the parametric model, and said model represents local volume as a function of time over the motion cycle; and
   a parameter determiner (218) configured to estimate at least one object motion parameter based on the fitted model, wherein said estimated object motion parameter corresponds to one of the parameters of the fitted parametric motion model.

2. The object motion parameter determiner of claim 1, wherein the deformation vector field determiner is configured to determine the deformation vector fields using a non-rigid registration.

3. The object motion parameter determiner of claim 2, wherein the non-rigid registration is configured to map the one of said 3D images to the consecutive one of said 3D images.

4. The object motion parameter determiner of claim 3, wherein the deformation vector field determiner is configured to determine the deformation vector fields by minimizing an objective function that includes a weighted similarity term and a regularizing term.

5. The object motion parameter determiner of any of claims 1 to 4, wherein the volume curve is configured to determine the volume curve by calculating a Jacobian matrix consisting of first derivatives of the deformation vector fields.

6. The object motion parameter determiner of any of claims 1 to 4, wherein the volume curve determiner is configured to determine the volume curve by calculating intensity differences of the deformation vector fields.

7. The object motion parameter determiner of any of claims 1 to 6, wherein the model is a curve represented by a $cos^{2n}$ function, wherein $n$ corresponds to a phase of interest.

8. The object motion parameter determiner of claim 7, wherein the at least one object motion parameter includes at least one of a motion amplitude $\alpha$, a motion phase o, a parameter n that can be set to place emphasis on a particular motion phase, a parameter $\Phi$ designating the time of a predetermined motion phase, or a motion offset.

9. The object motion parameter determiner of any of claims 1 to 8, further comprising:

a confidence determiner (220) configured to determine a confidence level of the estimate based on an error difference between the fitted model and the volume curve.

10. The object motion parameter determiner of claim 9, wherein the confidence determiner is configured to determine confidence level based on a squared difference between the fitted model and the volume curve, weighted with an inverse of an amplitude of the motion cycle.

11. The object motion parameter determiner of any of claims 1 to 10, further comprising:

a state identifier (222) configured to identify a state of the object by comparing one or more of the fitted model or the at least one object motion parameter based on a bank (224) of patterns and/or values corresponding to known healthy and unhealthy states.

12. The object motion parameter determiner of claim 11, further comprising:

a recommender (226) configured to recommend a course of action for the object based on the determined state of the object.

13. The object motion parameter determiner of any of claims 1 to 12, further comprising:

a display (124) configured to display at least one of the fitted model or the at least one object motion parameter.

14. A computer-implemented automated method of estimating a motion parameter for a motion of a moving object, comprising:

determining deformation vector fields for a 4D image set, which 4D image set includes three or more different 3D images, each 3D image corresponding to a different temporal point in a motion phases of a motion cycle of said moving object, wherein each deformation vector field maps one of said 3D images to a consecutive one of said 3D images such as to establish a 3D voxel-wise correspondence between the images;
generating, based on the deformation vector fields, for a 3D image voxel its corresponding volume curve across the set of 3D images, wherein said volume curve describes the voxel-wise 3D volume change over the motion cycle as a function of time;
fitting a predetermined parametric motion model to the volume curve, wherein said fitting adapts the parameters of the parametric model, and said model represents local volume as a function of time over the motion cycle; and
estimating at least one object motion parameter based on the fitted model and generating a signal indicative thereof, wherein said estimated object motion parameter corresponds to one of the parameters of the fitted parametric motion model.

15. The method of claim 14, wherein determining the deformation vector fields includes employing a non-rigid registration that maps the one of the 3D images to a consecutive one of the 3D images, minimizing an objective function that includes a weighted similarity term and a regularizing term.

**Patentansprüche**

1. Objektbewegungsparameter-Ermittlungseinheit (122), die konfiguriert ist, um einen Bewegungsparameter für eine Bewegungseigenschaft eines sich bewegenden Objekts zu schätzen, umfassend:

eine Verformungsvektorfeld-Ermittlungseinheit (210), die konfiguriert ist, um Verformungsvektorfelder für einen 4D-Bildsatz zu ermitteln, wobei der 4D-Bildsatz drei oder mehr verschiedene 3D-Bilder umfasst, wobei jedes 3D-Bild einem anderen Zeitpunkt in einer Bewegungsphase eines Bewegungszyklus des sich bewegenden Objekts entspricht, wobei jedes Verformungsvektorfeld eines der genannten 3D-Bilder auf ein nachfolgendes der genannten 3D-Bilder abbildet, um so eine 3D-voxelweise Übereinstimmung zwischen den Bildern zu erreichen;
eine Volumenkurven-Ermittlungseinheit (212), die konfiguriert ist, um basierend auf den Verformungsvektorfeldern eine entsprechende Volumenkurve für ein 3D-Bildvoxel über den Satz von 3D-Bildern zu erzeugen, wobei die genannte Volumenkurve die voxelweise 3D-Volumenveränderung über den Bewegungszyklus als eine Funktion der Zeit beschreibt;
eine Modellanpassungseinheit (214), die konfiguriert ist, um ein parametrisches vorgegebenes Bewegungsmodell an die Volumenkurve anzupassen, wobei bei der genannte Anpassung die Parameter des parametrischen Modells angepasst werden, und wobei das genannte Modell das lokale Volumen als eine Funktion der Zeit über den Bewegungszyklus darstellt; und
eine Parameter-Ermittlungseinheit (218), die konfiguriert ist, um mindestens einen Objektbewegungsparameter basierend auf dem angepassten Modell zu schätzen, wobei der genannte geschätzte Objektbewegungsparameter einem der Parameter des angepassten parametrischen Bewegungsmodells entspricht.

2. Objektbewegungsparameter-Ermittlungseinheit nach Anspruch 1, wobei die Verformungsvektorfeld-Ermittlungseinheit konfiguriert ist, um die Verformungsvektorfelder unter Verwendung einer nicht-starren Registrierung zu ermitteln.

3. Objektbewegungsparameter-Ermittlungseinheit nach Anspruch 2, wobei die nicht-starre Registrierung konfiguriert ist, um eines der genannten 3D-Bilder auf das nachfolgende eine der genannten 3D-Bilder abzubilden.

4. Objektbewegungsparameter-Ermittlungseinheit nach Anspruch 3, wobei die Verformungsvektorfeld-Ermittlungseinheit konfiguriert ist, um die Verformungsvektorfelder durch Minimieren einer Objektfunktion zu ermitteln, die einen gewichteten Ähnlichkeitsterm und einen regulierenden Term enthält.

5. Objektbewegungsparameter-Ermittlungseinheit nach einem der Ansprüche 1 bis 4, wobei die Volumenkurve konfiguriert ist, um die Volumenkurve durch Berechnen einer Jacobimatrix bestehend aus ersten Ableitungen der Verformungsvektorfelder zu ermitteln.

6. Objektbewegungsparameter-Ermittlungseinheit nach einem der Ansprüche 1 bis 4, wobei die Volumenkurven-Ermittlungseinheit konfiguriert ist, um die Volumenkurve durch Berechnen von Intensitätsdifferenzen der Verformungsvektorfelder zu ermitteln.

7. Objektbewegungsparameter-Ermittlungseinheit nach einem der Ansprüche 1 bis 6, wobei das Modell eine durch eine $cos^{2n}$-Funktion dargestellte Kurve ist, wobei $n$ einer interessierenden Phase entspricht.

8. Objektbewegungsparameter-Ermittlungseinheit nach Anspruch 7, wobei der mindestens eine Objektbewegungsparameter mindestens eines von einer Bewegungsamplitude $\alpha$, einer Bewegungsphase o, einem Parameter n, der eingestellt werden kann, um die Betonung auf eine bestimmte Bewegungsphase zu legen, einem Parameter $\Phi$, der die Zeit einer vorgegebenen Bewegungsphase angibt, oder einem Bewegungsversatz umfasst.

9. Objektbewegungsparameter-Ermittlungseinheit nach einem der Ansprüche 1 bis 8, die weiterhin Folgendes umfasst:

eine Konfidenz-Ermittlungseinheit (220), die konfiguriert ist, um einen Konfidenzgrad des Schätzwerts basierend auf einer Fehlerdifferenz zwischen dem angepassten Modell und der Volumenkurve zu ermitteln.

10. Objektbewegungsparameter-Ermittlungseinheit nach Anspruch 9, wobei die Konfidenz-Ermittlungseinheit konfiguriert ist, um den Konfidenzgrad basierend auf einer quadrierten Differenz zwischen dem angepassten Modell und der Volumenkurve, gewichtet mit einem Inversen einer Amplitude des Bewegungszyklus, zu ermitteln.

**11.** Objektbewegungsparameter-Ermittlungseinheit nach einem der Ansprüche 1 bis 10, die weiterhin Folgendes umfasst:

eine Zustandsidentifizierungseinheit (222), die konfiguriert ist, um einen Zustand des Objekts zu identifizieren durch Vergleichen von einem oder mehreren von dem angepassten Modell oder dem mindestens einen Objektbewegungsparameter basierend auf einer Bank (224) von Mustern und/oder Werten, die bekannten gesunden und ungesunden Zuständen entsprechen.

**12.** Objektbewegungsparameter-Ermittlungseinheit nach Anspruch 11, die weiterhin Folgendes umfasst:

eine Empfehlungseinheit (226), die konfiguriert ist, um eine Handlungsweise für das Objekt basierend auf dem ermittelten Zustand des Objekts zu empfehlen.

**13.** Objektbewegungsparameter-Ermittlungseinheit nach einem der Ansprüche 1 bis 12, die weiterhin Folgendes umfasst:

eine Anzeige (124), das konfiguriert ist, um mindestens eines von dem angepassten Modell oder dem mindestens einen Objektbewegungsparameter anzuzeigen.

**14.** Computer-implementiertes automatisiertes Verfahren zum Schätzen eines Bewegungsparameters für eine Bewegung eines sich bewegenden Objekts, wobei das Verfahren Folgendes umfasst:

Bestimmen von Verformungsvektorfeldern für einen 4D-Bildsatz, wobei der 4D-Bildsatz drei oder mehr verschiedene 3D-Bilder umfasst, wobei jedes 3D-Bild einem anderen Zeitpunkt in einer Bewegungsphase eines Bewegungszyklus des genannten sich bewegenden Objekts entspricht, wobei jedes Verformungsvektorfeld eines der genannten 3D-Bilder auf ein nachfolgendes der genannten 3D-Bilder abbildet, um so eine 3D-voxelweise Übereinstimmung zwischen den Bildern zu erreichen;
Erzeugen, basierend auf den Verformungsvektorfeldern, einer entsprechenden Volumenkurve für ein 3D-Bildvoxel über den Satz von 3D-Bildern, wobei die genannte Volumenkurve die voxelweise 3D-Volumenveränderung über den Bewegungszyklus als eine Funktion der Zeit beschreibt;
Anpassen eines vorgegebenen parametrischen Bewegungsmodells an die Volumenkurve, wobei bei dem genannten Anpassen die Parameter des parametrischen Modells angepasst werden, und wobei das genannte Modell das lokale Volumen als eine Funktion der Zeit über den Bewegungszyklus darstellt; und
Schätzen von mindestens einem Objektbewegungsparameter basierend auf dem angepassten Modell und Erzeugen eines diesen angebenden Signals, wobei der genannte geschätzte Objektbewegungsparameter einem der Parameter des angepassten parametrischen Bewegungsmodells entspricht.

**15.** Verfahren nach Anspruch 14, wobei das Bestimmen der Verformungsvektorfelder das Nutzen einer nicht-starren Registrierung umfasst, die das eine der 3D-Bilder auf ein nachfolgendes der 3D-Bilder abbildet, wobei eine Objektfunktion minimiert wird, die einen gewichteten Ähnlichkeitsterm und einen regulierenden Term enthält.

**Revendications**

**1.** Déterminateur de paramètre de mouvement d'objet (122) configuré pour estimer un paramètre de mouvement pour une caractéristique de mouvement d'un objet en mouvement, comprenant :

un déterminateur de champ vectoriel de déformation (210) configuré pour déterminer des champs vectoriels de déformation pour un jeu d'images en 4D, lequel jeu d'images en 4D inclut trois images en 3D différentes ou plus, chaque image en 3D correspondant à un point temporel différent dans des phases de mouvement d'un cycle de mouvement de l'objet en mouvement, dans lequel chaque champ vectoriel de déformation mappe l'une desdites images en 3D à une image consécutive desdites images en 3D de sorte à établir une correspondance par voxel 3D entre les images ;
un déterminateur de courbe de volume (212) configuré pour générer, sur la base des champs vectoriels de déformation, pour un voxel d'image en 3D , sa courbe de volume correspondante sur le jeu d'images en 3D, dans lequel ladite courbe de volume décrit le changement de volume 3D par voxel sur le cycle de mouvement en fonction du temps ;
un ajusteur de modèle (214) configuré pour ajuster un modèle de mouvement prédéterminé paramétrique à la courbe de volume, dans lequel ledit ajustement adapte les paramètres du modèle paramétrique, et ledit modèle représente le volume local en fonction du temps sur le cycle de mouvement ; et

un déterminateur de paramètre (218) configuré pour estimer au moins un paramètre de mouvement d'objet sur la base du modèle ajusté, dans lequel ledit paramètre de mouvement d'objet estimé correspond à l'un des paramètres du modèle de mouvement paramétrique ajusté.

2. Déterminateur de paramètre de mouvement d'objet selon la revendication 1, dans lequel le déterminateur de champ vectoriel de déformation est configuré pour déterminer les champs vectoriels de déformation à l'aide d'un recalage non rigide.

3. Déterminateur de paramètre de mouvement d'objet selon la revendication 2, dans lequel le recalage non rigide est configuré pour mapper l'une desdites images en 3D à l'image consécutive desdites images en 3D.

4. Déterminateur de paramètre de mouvement d'objet selon la revendication 3, dans lequel le déterminateur de champ vectoriel de déformation est configuré pour déterminer les champs vectoriels de déformation en réduisant au minimum une fonction d'objectif qui inclut une condition de similitude pondérée et une condition de régularisation.

5. Déterminateur de paramètre de mouvement d'objet selon l'une quelconque des revendications 1 à 4, dans lequel la courbe de volume est configurée pour déterminer la courbe de volume en calculant une matrice jacobienne constituée de premières dérivées des champs vectoriels de déformation.

6. Déterminateur de paramètre de mouvement d'objet selon l'une quelconque des revendications 1 à 4, dans lequel le déterminateur de la courbe de volume est configuré pour déterminer la courbe de volume en calculant des différences d'intensité des champs vectoriels de déformation.

7. Déterminateur de paramètre de mouvement d'objet selon l'une quelconque des revendications 1 à 6, dans lequel le modèle est une courbe représentée par une fonction $cos^{2n}$, dans laquelle $n$ correspond à une phase d'intérêt.

8. Déterminateur de paramètre de mouvement d'objet selon la revendication 7, dans lequel l'au moins un paramètre de mouvement d'objet inclut au moins l'un d'une amplitude de mouvement $\alpha$, d'une phase de mouvement o, d'un paramètre n qui peut être réglé pour mettre l'accent sur une phase de mouvement particulière, d'un paramètre $\Phi$ désignant la durée d'une phase de mouvement prédéterminée, ou d'un décalage de mouvement.

9. Déterminateur de paramètre de mouvement d'objet selon l'une quelconque des revendications 1 à 8, comprenant en outre :

un déterminateur de confiance (220) configuré pour déterminer un niveau de confiance de l'estimation sur la base d'une différence erronée entre le modèle ajusté et la courbe de volume.

10. Déterminateur de paramètre de mouvement d'objet selon la revendication 9, dans lequel le déterminateur de confiance est configuré pour déterminer le niveau de confiance sur la base d'une différence au carré entre le modèle ajusté et la courbe de volume, pondérée par une valeur inverse d'une amplitude du cycle de mouvement.

11. Déterminateur de paramètre de mouvement d'objet selon l'une quelconque des revendications 1 à 10, comprenant en outre :

un identifiant d'état (222) configuré pour identifier un état de l'objet en comparant un ou plusieurs du modèle ajusté ou de l'au moins un paramètre de mouvement d'objet basé sur une série (224) de motifs et/ou de valeurs correspondant à des états de bonne santé et de mauvaise santé connus.

12. Déterminateur de paramètre de mouvement d'objet selon la revendication 11, comprenant en outre :

un recommandeur (226) configuré pour recommander une ligne de conduite de l'objet sur la base de l'état déterminé de l'objet.

13. Déterminateur de paramètre de mouvement d'objet selon l'une quelconque des revendications 1 à 12, comprenant en outre :

un affichage (124) configuré pour afficher au moins l'un du modèle ajusté ou de l'au moins un paramètre de mouvement d'objet.

14. Procédé automatisé mis en oeuvre par ordinateur d'estimation d'un paramètre de mouvement pour un mouvement d'un objet en mouvement, comprenant :

la détermination de champs vectoriels de déformation pour un jeu d'images en 4D, lequel jeu d'images en 4D inclut trois images en 3D différentes ou plus, chaque image en 3D correspondant à un point temporel différent dans des phases de mouvement d'un cycle de mouvement dudit objet en mouvement, dans lequel chaque champ vectoriel de déformation mappe l'une desdites images en 3D à une image consécutive desdites images en 3D de sorte à établir une correspondance par voxel 3D entre les images ;

la génération, sur la base des champs vectoriels de déformation, pour un voxel d'image en 3D, de sa courbe de volume correspondante sur le jeu d'images en 3D, dans lequel ladite courbe de volume décrit le changement de volume 3D par voxel sur le cycle de mouvement en fonction du temps ;

l'ajustement d'un modèle de mouvement paramétrique prédéterminé à la courbe de volume, dans lequel ledit ajustement adapte les paramètres du modèle paramétrique, et ledit modèle représente le volume local en fonction du temps sur le cycle de mouvement ; et

l'estimation d'au moins un paramètre de mouvement d'objet sur la base du modèle ajusté et la génération d'un signal indicatif de celui-ci, dans lequel ledit paramètre de mouvement d'objet estimé correspond à l'un des paramètres du modèle de mouvement paramétrique ajusté.

15. Procédé selon la revendication 14, dans lequel la détermination des champs vectoriels de déformation inclut l'utilisation d'un recalage non rigide qui mappe l'une des images en 3D à une image consécutive des images en 3D, la réduction à un minimum d'une fonction d'objectif qui inclut une condition de similitude pondérée et une condition de régularisation.

FIG. 1

EP 2 867 861 B1

122

## Object motion parameter determiner

| Image to motion cycle correlator | 202 | DVF determiner | 210 |

| Image selector | 204 | Volume curve determiner | 212 |

| Phase mapping | 206 | Model fitter | 214 |

| Baseline image identifier | 208 | Motion model(s) | 216 |

| Parameter determiner | 218 | Confidence determiner | 220 |

| State identifier | 222 | Pattern and/or value bank | 224 |

| Recommender | 226 | Rules | 228 |

# FIG. 2

FIG. 3

FIG. 4

FIG. 5

4D data set, including at least three images corresponding to different phases of a motion cycle, obtained — 602

Determine DVFs across the images by registering images and optimizing an objective function including a similarity term and a regularization term — 604

Generate volume curve for each voxel based on the DVFs — 606

Fit motion model to each volume curve — 608

Estimate motion parameter(s) based on fitted model — 610

Determine confidence level for estimated motion parameters — 612

Display and/or convey fitted model and/or parameters — 614

Recommend course of action based on fitted model and/or estimated motion parameters — 616

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Phys. Med. Biol.,* 2011, vol. 56, 2279-2298

- **KABUS et al.** Fast elastic image registration. *Proc. of MICCAI Workshop: Medical Image Analysis For The Clinic -A Grand Challenge,* 2010, 81-89